# EUROPEAN PATENT SPECIFICATION

(11) **EP 3 709 396 B1**
(45) Date of publication and mention of the grant of the patent: **28.09.2022**
(21) Application number: 20165446.4
(22) Date of filing: 26.03.2018
(51) Int. Cl.: H01M 4/04, H01M 4/133, H01M 4/134, H01M 4/1393, H01M 4/1395, H01M 4/36, H01M 4/38, H01M 4/62, H01M 4/66, H01M 4/583, H01M 4/587, H01M 4/02

(54) **METHODS OF FORMING CARBON-SILICON COMPOSITE MATERIAL ON A CURRENT COLLECTOR**
VERFAHREN ZUR HERSTELLUNG VON KOHLENSTOFF-SILICIUM-VERBUNDMATERIAL AUF EINEM STROM
PROCÉDÉS DE FORMATION DE MATÉRIAU COMPOSITE DE CARBONE-SILICIUM SUR UN COURANT

(30) Priority: 28.03.2017 US 201715471860
(43) Date of publication of application: 16.09.2020
(62) Divisional of application: 18163841.2
(73) Proprietor: Enevate Corporation, Irvine, CA 92617 (US)
(72) Inventor: PARK, Benjamin Yong, Irvine, CA 92617 (US); BONHOMME, Frederic C., Lake Forest, CA 92630 (US); KAMATH, Rahul R., Irvine, CA 92617 (US)
(74) Representative: Bosch Jehle Patentanwaltsgesellschaft mbH

(56) References cited:
- EP-A1- 1 054 462
- WO-A1-2014/163986
- JP-A- 2008 112 710
- US-A1- 2014 170 475
- US-A1- 2014 170 482

## Description

### BACKGROUND

### Field of the Invention

The present disclosure relates to electrodes, electrochemical cells, and methods of forming electrodes and electrochemical cells. In particular, the present disclosure relates to methods of forming carbon-silicon composite material on a current collector.

### Description of the Related Art

A lithium ion battery typically includes a separator and/or electrolyte between an anode and a cathode. In one class of batteries, the separator, cathode and anode materials are individually formed into sheets or films. Sheets of the cathode, separator and anode are subsequently stacked or rolled with the separator separating the cathode and anode (e.g., electrodes) to form the battery. For the cathode, separator and anode to be rolled, each sheet must be sufficiently deformable or flexible to be rolled without failures, such as cracks, brakes, mechanical failures, etc. Typical electrodes include electro-chemically active material layers on electrically conductive metals (e.g., aluminum and copper). For example, carbon can be deposited onto a current collector along with an inactive binder material. Carbon is often used because it has excellent electrochemical properties and is also electrically conductive. Electrodes can be rolled or cut into pieces which are then layered into stacks. The stacks are of alternating electro-chemically active materials with the separator between them.

JP 2008 112710 A describes a negative-electrode material for lithium secondary batteries.

EP 1 054 462 A1 describes a lithium secondary battery comprising a cathode, an anode and lithium ion conductive electrolytic solution, each electrode containing an active material capable of incorporating and releasing lithium ions.

### SUMMARY

According to the invention, there are provided an electrode as defined by independent claim 1 and an electrode as defined by independent claim 4.

Further advantageous features of the invention are defined by the dependent claims.

### BRIEF DESCRIPTION OF THE DRAWINGS

Figure 1 illustrates an example method of forming an electrode in accordance with certain embodiments described herein.
Figure 2 shows examples of a slurry of carbon precursor and silicon particles coated and dried on stainless steel foils.
Figure 3 shows examples of pyrolysed composite material on stainless steel.
Figure 4 is a plot of discharge capacity as a function of the number of cycles for different samples.
Figure 5 is a plot of the IEC (International Electrotechnical Commission) capacity as a function of the cycle number for different samples.

### DETAILED DESCRIPTION

This application describes certain embodiments of electrodes (e.g., anodes and cathodes) and electrochemical cells that may include carbonized polymer and silicon material. For example, a mixture that includes a carbon precursor including silicon material can be formed into a composite material. This mixture can include both carbon and silicon and thus can be referred to as a carbon-silicon composite material, a silicon-carbon composite material, a carbon composite material, or a silicon composite material. This application also describes certain methods of forming such composite material on a current collector. A mixture comprising a carbon precursor and silicon material is currently not pyrolysed directly on a current collector (e.g., a copper or nickel current collector). During the carbonization process (e.g., under heat), the silicon and/or carbon may react directly with the metal current collector (e.g., creating a copper or nickel silicide or carbide). The metal silicide or carbide may prevent the composite material from adhering to the current collector and/or destroy the current collector by converting it into a different material. Various embodiments described herein can advantageously pyrolyse carbon precursor including silicon material on a current collector with sufficient attachment to the current collector and/or with relatively little or no adverse conversion of the current collector.

Typical carbon anode electrodes include a current collector such as a copper sheet. Carbon is deposited onto the collector along with an inactive binder material. Carbon is often used because it has excellent electrochemical properties and is also electrically conductive. Anode electrodes used in the rechargeable lithium-ion cells typically have a specific capacity of approximately 200 milliamp hours per gram (including the metal foil current collector, conductive additives, and binder material). Graphite, the active material used in most lithium ion battery anodes, has a theoretical energy density of 372 milliamp hours per gram (mAh/g). In comparison, silicon has a high theoretical capacity of 4200 mAh/g. Silicon, however, swells in excess of 300% upon lithiation. Because of this expansion, anodes including silicon may expand/contract and lose electrical contact to the rest of the anode. Therefore, a silicon anode should be designed to be able to expand while maintaining good electrical contact with the rest of the electrode.

U.S. Patent Application No. 13/008,800, U.S. Patent Application No. 13/601,976, and U.S. Patent Application No. 13/799,405 describe certain embodiments of carbon-silicon composite materials using carbonized polymer and silicon material. The carbonized polymer can act as an expansion buffer for silicon particles during cycling so that a high cycle life can be achieved. In certain embodiments, the resulting electrode can be an electrode that is comprised substantially of active material. For example, the carbonized polymer can form a substantially continuous conductive carbon phase(s) in the entire electrode as opposed to particulate carbon suspended in a non-conductive binder in one class of conventional lithium-ion battery electrodes. Because the polymer can be converted into an electrically conductive and electrochemically active matrix, the resulting electrode can be conductive enough that a metal foil or mesh current collector may be omitted, minimized, or reduced in some embodiments. Accordingly, in U.S. Patent Application No. 13/008,800, Application No. 13/601,976, and U.S. Patent Application No. 13/799,405, certain examples of monolithic, self-supported electrodes are disclosed. The electrodes can have a high energy density of between about 500 mAh/g to about 3500 mAh/g that can be due to, for example, 1) the use of silicon, 2) elimination or substantial reduction of metal current collectors, and 3) being comprised entirely or substantially entirely of active material.

A current collector may be preferred in some applications, for example, where current above a certain threshold or additional mechanical support may be desired. As described above, a mixture comprising a carbon precursor and silicon material is currently not pyrolysed directly on a current collector because it is thought that during the pyrolysing process, the carbon and/or silicon may react with the metal current collector. To overcome such challenges, the mixture can be provided and pyrolysed first on a substrate, removed from the substrate, and then attached to the current collector. U.S. Patent Application No. 13/333,864 and U.S. Patent Application No. 13/796,922 describe certain examples of a composite material attached to a current collector using an electrode attachment substance.

The present application also describes certain embodiments of electrodes including a current collector, electrochemical cells comprising such electrodes, and methods of forming such electrodes and electrochemical cells. For example, in various embodiments, the electrodes include composite material attached to a current collector. The electrodes described herein can be used as an anode in lithium ion batteries; they may also be used as the cathode in some electrochemical couples with additional additives. The electrodes can also be used in either secondary batteries (e.g., rechargeable) or primary batteries (e.g., nonrechargeable). Furthermore, various embodiments include material pyrolysed on a current collector that can sufficiently adhere to the current collector and with relatively little or no adverse reaction with the metal current collector.

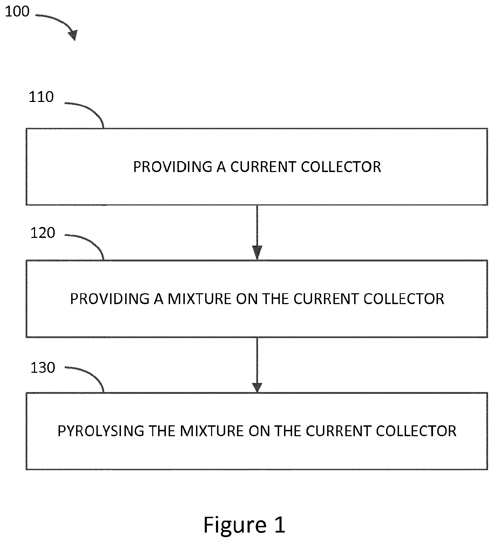

Figure 1 illustrates an example method of forming an electrode in accordance with certain embodiments described herein. The method 100 of forming an electrode can include providing a current collector as shown in block 110. The method 100 can also include providing a mixture on the current collector as shown in block 120. The mixture can include a precursor (e.g., a carbon precursor) and silicon particles. As shown in block 130, the method 100 can further include pyrolysing the mixture on the current collector. Pyrolysing the mixture can convert the precursor into one or more types of carbon phases as a substantially continuous phase with the silicon particles distributed throughout the composite material, and can adhere the composite material to the current collector. Accordingly, various embodiments described herein can pyrolyse a mixture of carbon precursor and silicon particles on a current collector to form a carbon-silicon composite material that adheres to the current collector. Such embodiments can advantageously result in higher yields due to less handling of fragile electrodes. Such embodiments can also advantageously result in faster processing and lower cost.

Without being bound to any particular theory, the silicon and/or carbon in the mixture may react with the metal, such as copper or nickel, in a current collector, likely creating a metal silicide or carbide that prevents adherence to the current collector and/or destroys the current collector by converting it into a different material. In various embodiments described herein, by using a current collector that reduces the likelihood of reactions with silicon and/or carbon, the formation of a metal silicide and/or carbide can be reduced (and/or avoided in some instances), allowing the adherence of the composite material to the current collector while preserving the conductive metal nature of the current collector. Some embodiments can include providing and pyrolysing a mixture of carbon precursor and silicon material on a current collector comprising a material that does not react with silicon and/or carbon. For example, instead of using a copper or nickel current collector, some embodiments can include providing and pyrolysing a mixture of carbon precursor and silicon material on a current collector comprising stainless steel, tungsten, or a combination thereof. Stainless steel and tungsten do not appear to react with silicon and carbon in the same manner as copper or nickel. As another example, some embodiments can include providing and pyrolysing a mixture of carbon precursor and silicon material on a current collector that is coated with a layer of polymer or carbon. Without being bound to any particular theory, the presence of a layer of coating on the current collector may isolate the current collector from the silicon and/or carbon in the mixture, reducing and/or avoiding in some instances, the formation of metal silicide and/or carbide. The steps in Figure 1 will now be described.

With reference to block 110, a current collector is provided. The current collector that is provided can include a current collector comprising stainless steel. In some embodiments, the current collector can comprise mainly stainless steel. For example, the current collector can include a stainless steel metal, e.g., a stainless steel foil. In some other embodiments, the current collector can include stainless steel as one of multiple materials. For example, the current collector can include a clad material comprising stainless steel, e.g., a clad foil comprising stainless steel on at least one side (e.g., on one side or on both sides) of the clad foil. In some embodiments, the current collector can comprise mainly tungsten. For example, the current collector can include a tungsten metal, e.g., a tungsten foil. In some other embodiments, the current collector can include tungsten as one of multiple materials. For example, the current collector can include a clad material comprising tungsten, e.g., a clad foil comprising tungsten on at least one side (e.g., on one side or on both sides) of the clad foil. As another example, the current collector can include a clad material comprising tungsten on one side and stainless steel on the other side.

In some embodiments, the current collector may include a polymer coating. For example, the current collector may include a polymer coating on a copper or nickel current collector. As another example, the current collector may include a polymer coating on a stainless steel and/or tungsten current collector. The current collector can be coated with a polymer on at least one side of the current collector. The polymer coating may include a carbon precursor, such as any of the precursors described herein such as polyamideimide. In some embodiments, the polymer coating may be the same material as the precursor in the mixture. In some other embodiments, the polymer coating might not be the same material as the precursor in the mixture. In various embodiments, the polymer coating can any of the polymers disclosed herein including polyamideimide, polyamic acid, polyimide, phenolic resins, epoxy resins, etc. The thickness of the polymer coating in various embodiments can be in the range of about 200 nanometers to about 5 µm (for example, about 200 nm, about 250 nm, about 300 nm, about 400 nm, about 500 nm, about 600 nm, about 700 nm, about 750 nm, about 800 nm, about 900 nm, about 1 µm, about 2 µm, about 3 µm, about 4 µm, about 5 µm, or any value within this range, etc.) or any range formed by any of the values within this range.

In some embodiments, the current collector with a polymer coating may be heat treated before further treatment (e.g., before a mixture is provided on the current collector). The heat treatment can create a carbon-coated current collector through a pyrolysis process. The pyrolysis process can be similar to the process to pyrolyse the mixture as described herein. Accordingly, in some embodiments, the provided current collector can include a current collector coated with a carbon material (e.g., a carbon film).

With reference to block 120, the mixture is provided on the current collector. In some embodiments, the mixture can be provided on the current collector, e.g., on a current collector comprising stainless steel, tungsten, or a combination thereof. For example, the mixture can be coated on a stainless steel or tungsten foil (e.g., directly coated in various embodiments). As another example, the mixture can be coated (e.g., directly coated in various embodiments) on at least one side of a clad foil comprising stainless steel, tungsten, or a combination thereof. The other side of the clad foil can include a different material, e.g., including copper or nickel. In some embodiments, the clad foil may comprise stainless steel on both sides of the clad foil, tungsten on both sides of the clad foil, or stainless steel on one side of the clad foil and tungsten on the other side of the clad foil. In some such instances, the mixture can also be coated on both sides of the clad foil.

As other examples, the mixture can be provided on a current collector coated with a polymer, carbon, or combination thereof on at least on side of the current collector. The mixture can be provided on the side of the current collector coated with the polymer, carbon, or combination thereof. The current collector may also be coated with polymer, carbon, or combination thereof on both sides (e.g., polymer coating on both sides of the current collector, carbon coating on both sides of the current collector, or carbon coating on one side and polymer coating on the other side, etc.), and the mixture can be provided on both sides of the current collector. In some instances, the current collector with the polymer coating, carbon coating, or combination thereof may include a current collector comprising stainless steel, tungsten, or a combination thereof. However, in some instances, the current collector with the polymer coating, carbon coating, or combination thereof does not necessarily include stainless steel, tungsten, or a combination thereof. For example, the current collector with the polymer or carbon coating may include copper or nickel in some embodiments.

The mixture that is provided on the current collector can include any of the mixtures described in U.S. Patent Application No. 13/008,800, U.S. Patent Application No. 13/601,976, and/or U.S. Patent Application No. 13/799,405. The mixture can include a variety of different components. The mixture can include one or more precursors. In certain embodiments, the precursor is a hydrocarbon compound. For example, the precursor can include polyamideimide, polyamic acid, polyimide, etc. Other precursors include phenolic resins, epoxy resins, and other polymers. The mixture can further include a solvent. For example, the solvent can be N-methyl-pyrollidone (NMP). Other possible solvents include acetone, diethyl ether, gamma butyrolactone, isopropanol, dimethyl carbonate, ethyl carbonate, dimethoxyethane, etc. Examples of precursor and solvent solutions include PI-2611 (HD Microsystems), PI-5878G (HD Microsystems) and VTEC PI-1388 (RBI, Inc.). PI-2611 is comprised of >60% n-methyl-2-pyrollidone and 10-30% s-biphenyldianhydride/p-phenylenediamine. PI-5878G is comprised of >60% n-methylpyrrolidone, 10-30% polyamic acid of pyromellitic dianhydride/oxydianiline, 10-30% aromatic hydrocarbon (petroleum distillate) including 5-10% 1,2,4-trimethylbenzene. In certain embodiments, the amount of precursor (e.g., solid polymer) in the solvent is about 10 wt. % to about 30 wt. %.

The mixture can include silicon particles as described herein. The mixture may comprise about 5 % to about 80 % by weight of the precursor, and greater than 0 % to about 90 % by weight of the silicon particles. Additional materials can also be included in the mixture. As an example, carbon particles including graphite active material, chopped or milled carbon fiber, carbon nanofibers, carbon nanotubes, and other conductive carbons can be added to the mixture. Conductive particles can also be added to the mixture. In addition, the mixture can be mixed to homogenize the mixture.

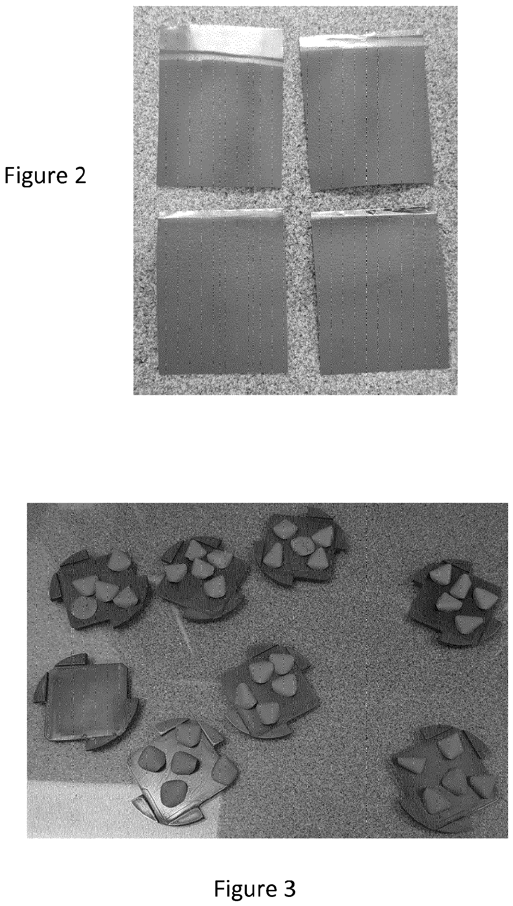

In certain embodiments, the mixture can be cast on the current collector. In some embodiments, casting includes using a gap extrusion, tape casting, or a blade casting technique. The blade casting technique can include applying a coating to the current collector by using a flat surface (e.g., blade) which is controlled to be a certain distance above the current collector. A slurry (or liquid) can be applied to the current collector, and the blade can be passed over the slurry to spread the slurry over the current collector. The thickness of the coating can be controlled by the gap between the blade and the current collector since the slurry passes through the gap. As the slurry passes through the gap, excess slurry can also be scraped off. For example, the mixture can be cast on the current collector. In some embodiments, the mixture can then be dried to remove the solvent. In some instances, the mixture can be dried in a convention oven. For example, a polyamic acid and NMP solution can be dried at about 110 °C for about 2 hours to remove the NMP solution. In some embodiments, the dried mixture can be further dried or cured. In some embodiments, mixture can be hot pressed (e.g., between graphite plates in an oven). A hot press can be used to dry and to keep the dried mixture flat. For example, the dried mixture from a polyamic acid and NMP solution can be hot pressed at about 200 °C for about 8 to 16 hours. Alternatively, the entire process including casting and drying can be done as a roll-to-roll process using standard film-handling equipment. The dried mixture can be rinsed to remove any solvents or etchants that may remain. For example, de-ionized (DI) water can be used to rinse the dried mixture. The dried mixture may be cut or mechanically sectioned into smaller pieces. In some embodiments, the mixture can be coated on the current collector by a slot die coating process (e.g., metering a constant or substantially constant weight and/or volume through a set or substantially set gap). Figure 2 shows examples of a slurry of carbon precursor and silicon particles coated and dried on stainless steel foils.

With reference to block 130 of Figure 1, the mixture further goes through pyrolysis. In various embodiments, pyrolysis can convert the precursor to carbon and can adhere the pyrolysed material to the current collector. For example, after the mixture is dried, the material on the current collector can be punched and pyrolysed in a furnace. Different ramp rates and final dwell temperatures of the pyrolysis can be used in order to obtain the desired electrodes. Figure 3 shows examples of pyrolysed composite material on stainless steel. These samples were coated on one side, dried, and punched into circular shapes before pyrolysis.

In certain embodiments, the mixture is pyrolysed in a reducing atmosphere. For example, an inert atmosphere, a vacuum and/or flowing argon, nitrogen, or helium gas can be used. In some embodiments, the mixture is heated to about 900 °C to about 1350 °C. For example, polyimide formed from polyamic acid can be carbonized at about 1175 °C for about one hour. In certain embodiments, the heat up rate and/or cool down rate of the mixture is about 10 °C/min. A holder may be used to keep the mixture in a particular geometry. The holder can be graphite, metal, etc. In certain embodiments, the mixture is held flat. After the mixture is pyrolysed, tabs can be attached to the pyrolysed material to form electrical contacts. For example, nickel, copper or alloys thereof can be used for the tabs.

In certain embodiments, one or more of the methods described herein is a continuous process. For example, casting, drying, possibly curing, and pyrolysis can be performed in a continuous process; e.g., the mixture can be coated, dried, and pyrolysed on the current collector. The mixture can be dried while rotating on the cylinder creating a film. The dried mixture on the current collector can be transferred as a roll and fed into another machine for further processing. Extrusion and other film manufacturing techniques known in industry could also be utilized prior to the pyrolysis step.

Pyrolysis of the precursor results in a carbon material (e.g., at least one carbon phase). In certain embodiments, the carbon material is a hard carbon. In some embodiments, the precursor is any material that can be pyrolysed to form a hard carbon. When the mixture includes one or more additional materials or phases in addition to the carbonized precursor, a composite material can be created. In particular, as described herein, the mixture can include silicon particles creating a silicon-carbon (e.g., at least one first phase comprising silicon and at least one second phase comprising carbon) or silicon-carbon-carbon (e.g., at least one first phase comprising silicon, at least one second phase comprising carbon, and at least one third phase comprising carbon) composite material.

Silicon particles can increase the specific lithium insertion capacity of the composite material. When silicon absorbs lithium ions, it experiences a large volume increase on the order of 300+ volume percent which can cause electrode structural integrity issues. In addition to volumetric expansion related problems, silicon is not inherently electrically conductive, but becomes conductive when it is alloyed with lithium (e.g., lithiation). When silicon de-lithiates, the surface of the silicon losses electrical conductivity. Furthermore, when silicon de-lithiates, the volume decreases which results in the possibility of the silicon particle losing contact with the matrix. The dramatic change in volume also results in mechanical failure of the silicon particle structure, in turn, causing it to pulverize. Pulverization and loss of electrical contact have made it a challenge to use silicon as an active material in lithium-ion batteries. A reduction in the initial size of the silicon particles can prevent further pulverization of the silicon powder as well as minimizing the loss of surface electrical conductivity. Furthermore, adding material to the composite that can elastically deform with the change in volume of the silicon particles can reduce the chance that electrical contact to the surface of the silicon is lost. For example, the composite material can include carbons such as graphite which contributes to the ability of the composite to absorb expansion and which is also capable of intercalating lithium ions adding to the storage capacity of the electrode (e.g., chemically active). Therefore, the composite material may include one or more types of carbon phases.

As described herein, in order to increase volumetric and gravimetric energy density of lithium-ion batteries, silicon may be used as the active material for the cathode or anode. Several types of silicon materials, e.g., silicon nanopowders, silicon nanofibers, porous silicon, and ball-milled silicon, are viable candidates as active materials for the negative or positive electrode.

In some embodiments, all, substantially all, or at least some of the silicon particles may have a particle size (e.g., the diameter or the largest dimension of the particle) less than about 50 µm, less than about 40 µm, less than about 30 µm, less than about 20 µm, less than about 10 µm, less than about 1 µm, between about 10 nm and about 50 µm, between about 10 nm and about 40 µm, between about 10 nm and about 30 µm, between about 10 nm and about 20 µm, between about 0.1 µm and about 20 µm, between about 0.5 µm and about 20 µm, between about 1 µm and about 20 µm, between about 1 µm and about 15 µm, between about 1 µm and about 10 µm, between about 10 nm and about 10 µm, between about 10 nm and about 1 µm, less than about 500 nm, less than about 100 nm, and about 100 nm. For example, in some embodiments, the average particle size (or the average diameter or the average largest dimension) or the median particle size (or the median diameter or the median largest dimension) of the silicon particles can be less than about 50 µm, less than about 40 µm, less than about 30 µm, less than about 20 µm, less than about 10 µm, less than about 1 µm, between about 10 nm and about 50 µm, between about 10 nm and about 40 µm, between about 10 nm and about 30 µm, between about 10 nm and about 20 µm, between about 0.1 µm and about 20 µm, between about 0.5 µm and about 20 µm, between about 1 µm and about 20 µm, between about 1 µm and about 15 µm, between about 1 µm and about 10 µm, between about 10 nm and about 10 µm, between about 10 nm and about 1 µm, less than about 500 nm, less than about 100 nm, and about 100 nm. In some embodiments, the silicon particles may have a distribution of particle sizes. For example, at least about 95%, at least about 90%, at least about 85%, at least about 80%, at least about 70%, or at least about 60% of the particles may have the particle size described herein.

The amount of silicon provided in the mixture or in the composite material can be greater than zero percent by weight of the mixture and/or composite material. In certain embodiments, the amount of silicon is within a range from about 0 % to about 95 % by weight of the composite material including greater than about 0 % to about 95 % by weight, greater than about 0 % to about 90 % by weight, greater than about 0 % to about 35 % by weight, greater than about 0 % to about 25 % by weight, from about 10 % to about 35 % by weight, at least about 30 % by weight, from about 30 % to about 95 % by weight, from about 30 % to about 90 % by weight, from about 30 % to about 80 % by weight, at least about 50 % by weight, from about 50 % to about 95 % by weight, from about 50 % to about 90 % by weight, from about 50 % to about 80 % by weight, from about 50 % to about 70 % by weight, at least about 60 % by weight, from about 60 % to about 95 % by weight, from about 60 % to about 90 % by weight, from about 60 % to about 80 % by weight, at least about 70 % by weight, from about 70 % to about 95 % by weight, or from about 70 % to about 90 % by weight.

In accordance with certain embodiments described herein, certain micrometer-sized silicon particles with nanometer surface features can achieve high energy density, and can be used in composite materials and/or electrodes for use in electro-chemical cells to improve performance during cell cycling. Small particle sizes of silicon (for example, sizes in the nanometer range) generally can increase cycle life performance of an electrode. They also can display very high irreversible capacity. However, small particle sizes also can result in very low volumetric energy density (for example, for the overall cell stack) due to the difficulty of packing the active material. Larger particle sizes, (for example, sizes in the micrometer range) generally can result in higher density anode material. However, the expansion of the silicon active material can result in poor cycle life due to particle cracking.

In some embodiments, micrometer-sized silicon particles can provide good volumetric and gravimetric energy density combined with good cycle life. In certain embodiments, to obtain the benefits of both micrometer-sized silicon particles (e.g., high energy density) and nanometer-sized silicon particles (e.g., good cycle behavior), silicon particles can have an average particle size in the micrometer range and a surface including nanometer-sized features. In some embodiments, the silicon particles have an average particle size (e.g., average diameter or average largest dimension) or a median particle size (e.g., median diameter or median largest dimenstion) between about 0.1 µm and about 30 µm or between about 0.1 µm and all values up to about 30 µm. For example, in some embodiments, the silicon particles can have an average particle size between about 0.1 µm and about 20 µm, between about 0.5 µm and about 25 µm, between about 0.5 µm and about 20 µm, between about 0.5 µm and about 15 µm, between about 0.5 µm and about 10 µm, between about 0.5 µm and about 5 µm, between about 0.5 µm and about 2 µm, between about 1 µm and about 20 µm, between about 1 µm and about 15 µm, between about 1 µm and about 10 µm, between about 5 µm and about 20 µm, etc. Thus, the average particle size or the median particle size can be any value between about 0.1 µm and about 30 µm, e.g., 0.1 µm, 0.5 µm, 1 µm, 5 µm, 6 µm, 7 µm, 8 µm, 9 µm, 10 µm, 15 µm, 20 µm, 25 µm, and 30 µm. The nanometer-sized features can include an average feature size (e.g., an average diameter or an average largest dimension) between about 1 nm and about 1 µm, between about 1 nm and about 750 nm, between about 1 nm and about 500 nm, between about 1 nm and about 250 nm, between about 1 nm and about 100 nm, between about 10 nm and about 500 nm, between about 10 nm and about 250 nm, between about 10 nm and about 100 nm, between about 10 nm and about 75 nm, or between about 10 nm and about 50 nm. The features can include silicon material.

Furthermore, the silicon particles may have a distribution of particle sizes. For example, at least about 95%, at least about 90%, at least about 85%, at least about 80%, at least about 70%, or at least about 60% of the particles may have the particle size described herein.

In certain embodiments, the silicon particles are at least partially crystalline, substantially crystalline, and/or fully crystalline. Furthermore, the silicon particles may or may not be substantially pure silicon. For example, the silicon particles may be substantially silicon or may be a silicon alloy. In one embodiment, the silicon alloy includes silicon as the primary constituent along with one or more other elements.

Certain embodiments described herein can have an average surface area per unit mass (e.g., using Brunauer Emmet Teller (BET) particle surface area measurements) between about 1 m²/g and about 30 m²/g, between about 1 m²/g and about 25 m²/g, between about 1 m²/g and about 20 m²/g, between about 1 m²/g and about 10 m²/g, between about 2 m²/g and about 30 m²/g, between about 2 m²/g and about 25 m²/g, between about 2 m²/g and about 20 m²/g, between about 2 m²/g and about 10 m²/g, between about 3 m²/g and about 30 m²/g, between about 3 m²/g and about 25 m²/g, between about 3 m²/g and about 20 m²/g, between about 3 m²/g and about 10 m²/g (e.g., between about 3 m²/g and about 6 m²/g), between about 5 m²/g and about 30 m²/g, between about 5 m²/g and about 25 m²/g, between about 5 m²/g and about 20 m²/g, between about 5 m²/g and about 15 m²/g, or between about 5 m²/g and about 10 m²/g.

Compared with the silicon particles used in conventional electrodes, the silicon particles described herein generally have a larger average particle size. In some such embodiments, the average surface area of the silicon particles described herein is generally smaller. Without being bound to any particular theory, the lower surface area of the silicon particles described herein may contribute to the enhanced performance of electrochemical cells.

Advantageously, the silicon particles described herein can improve performance of electro-chemically active materials such as improving capacity and/or cycling performance. Furthermore, electro-chemically active materials having such silicon particles may not significantly degrade as a result of lithiation of the silicon particles.

The amount of carbon obtained from the precursor can be about 5 % to about 80% by weight, about 5 % to about 70 % by weight, about 5 % to about 60 % by weight, about 5 % to about 50 % by weight, about 5 % to about 40 % by weight, about 5 % to about 30 % by weight, about 10 % to about 50 % by weight, about 10 % to about 40 % by weight, about 10 % to about 30 % by weight, about 10 % to about 25 % by weight, etc. For example, the amount of carbon obtained from the precursor can be about 10 % by weight, about 15 % by weight, about 20 % by weight, about 25 % by weight, etc. from the precursor.

The carbon from the precursor can be hard carbon. Hard carbon can be a carbon that does not convert into graphite even with heating in excess of 2800 degrees Celsius. Precursors that melt or flow during pyrolysis convert into soft carbons and/or graphite with sufficient temperature and/or pressure. Hard carbon may be selected since soft carbon precursors may flow and soft carbons and graphite are mechanically weaker than hard carbons. Other possible hard carbon precursors can include phenolic resins, epoxy resins, and other polymers that have a very high melting point or are crosslinked. The amount of hard carbon in the composite material can be any of the ranges described herein with respect to the amount of carbon obtained from the precursor. For example, in some embodiments, the amount of hard carbon in the composite material can have a value within a range of about 10 % to about 25 % by weight, about 10 % to about 30 % by weight, about 10 % to about 40 % by weight, about 10 % to about 50 % by weight, about 10 % by weight, about 20 % by weight, about 30 % by weight, about 40 % by weight, about 50 % by weight, or more than about 50 % by weight. In certain embodiments, the hard carbon phase is substantially amorphous. In other embodiments, the hard carbon phase is substantially crystalline. In further embodiments, the hard carbon phase includes amorphous and crystalline carbon. The hard carbon phase can be a matrix phase in the composite material. The hard carbon can also be embedded in the pores of the additives including silicon. The hard carbon may react with some of the additives to create some materials at interfaces. For example, there may be a silicon carbide layer between silicon particles and the hard carbon.

In some embodiments, graphite is one of the types of carbon phases from the precursor. In certain embodiments, graphite particles are added to the mixture. Advantageously, graphite can be an electrochemically active material in the battery as well as an elastic deformable material that can respond to volume change of the silicon particles. Graphite is the preferred active anode material for certain classes of lithium-ion batteries currently on the market because it has a low irreversible capacity. Additionally, graphite is softer than hard carbon and can better absorb the volume expansion of silicon additives. In certain embodiments, all, substantially all, or at least some of the graphite particles may have a particle size (e.g., a diameter or a largest dimension) between about 0.5 µm and about 20 µm. In some embodiments, an average particle size (e.g., an average diameter or an average largest dimension) or median particle size (e.g., a median diameter or a median largest dimension) of the graphite particles is between about 0.5 µm and about 20 µm. In some embodiments, the graphite particles may have a distribution of particle sizes. For example, at least about 95%, at least about 90%, at least about 85%, at least about 80%, at least about 70%, or at least about 60% of the particles may have the particle size described herein. In certain embodiments, the composite material can include graphite particles in an amount greater than 0 % and less than about 80 % by weight, including from 40 % to about 75 % by weight, from about 5 % to about 30 % by weight, from 5 % to about 25 % by weight, from 5 % to about 20 % by weight, or from 5 % to about 15 % by weight.

In certain embodiments, conductive particles which may also be electrochemically active are added to the mixture. Such particles can enable both a more electronically conductive composite as well as a more mechanically deformable composite capable of absorbing the large volumetric change incurred during lithiation and de-lithiation. In certain embodiments, all, substantially all, or at least some of the conductive particles can have a particle size (e.g., the diameter or the largest dimension) between about 10 nanometers and about 7 millimeters. In some embodiments, an average particle size (e.g., an average diameter or an average largest dimension) or a median particle size (e.g., a median diameter or a median largest dimension) of the conductive particles is between about 10 nm and about 7 millimeters. In some embodiments, the conductive particles may have a distribution of particle sizes. For example, at least about 95%, at least about 90%, at least about 85%, at least about 80%, at least about 70%, or at least about 60% of the particles may have the particle size described herein.

In certain embodiments, the mixture includes conductive particles in an amount greater than zero and up to about 80 % by weight. In some embodiments, the composite material includes about 45 % to about 80 % by weight. The conductive particles can be conductive carbon including carbon blacks, carbon fibers, carbon nanofibers, carbon nanotubes, etc. Many carbons that are considered as conductive additives that are not electrochemically active become active once pyrolysed in a polymer matrix. Alternatively, the conductive particles can be metals or alloys including copper, nickel, or stainless steel.

After the precursor is pyrolysed, the resulting material is a composite material that adheres to the current collector. The current collector can provide additional mechanical support as the composite material can also be a self-supporting monolithic structure, e.g., a self-supporting composite film. For example, the carbonized precursor can result in an electrochemically active structure that holds the composite material together. In some embodiments, the carbonized precursor can be a substantially continuous phase. Thus, the carbonized precursor can be a structural material as well as an electro-chemically active and electrically conductive material. In certain embodiments, the silicon particles and/or material particles added to the mixture are distributed throughout the composite material. In some embodiments, the silicon particles and/or other material particles can be homogenously distributed throughout the composite material to form a homogeneous composite.

In some embodiments, the composite material and/or electrode does not include a polymer beyond trace amounts that remain after pyrolysis of the precursor. In further embodiments, the composite material and/or electrode does not include a non-electrically conductive binder. The composite material may also include porosity. In some embodiments, the composite material (or the film) can include porosity of about 1% to about 70% or about 5% to about 50% by volume porosity. For example, the porosity can be about 5% to about 40% by volume porosity.

In certain embodiments, an electrode in a battery or electrochemical cell can include a composite material, including composite material with the silicon particles described herein. For example, the composite material can be used for the anode and/or cathode. In certain embodiments, the battery is a lithium ion battery. In further embodiments, the battery is a secondary battery, or in other embodiments, the battery is a primary battery.

Furthermore, the full capacity of the composite material of the electrodes described herein may not be utilized during use of the battery to improve life of the battery (e.g., number charge and discharge cycles before the battery fails or the performance of the battery decreases below a usability level). For example, a composite material with about 70 % by weight of silicon particles, about 20 % by weight of carbon from a precursor, and about 10 % by weight of graphite may have a maximum gravimetric capacity of about 3000 mAh/g, while the composite material may only be used up to an gravimetric capacity of about 550 to about 1500 mAh/g. Although, the maximum gravimetric capacity of the composite material may not be utilized, using the composite material at a lower capacity can still achieve a higher capacity than certain lithium ion batteries. In certain embodiments, the composite material is used or only used at an gravimetric capacity below about 70 % of the composite material's maximum gravimetric capacity. For example, the composite material is not used at an gravimetric capacity above about 70 % of the composite material's maximum gravimetric capacity. In further embodiments, the composite material is used or only used at an gravimetric capacity below about 50 % of the composite material's maximum gravimetric capacity or below about 30 % of the composite material's maximum gravimetric capacity.

### EXAMPLES

The following examples are provided to demonstrate the benefits of some embodiments of electrodes, electrochemical cells, and methods of forming the same. These examples are discussed for illustrative purposes and should not be construed to limit the scope of the disclosed embodiments.

Instead of forming electrochemically active material on a substrate, removing the active material from the substrate, and attaching the active material to a current collector, various embodiments described herein can simplify the manufacturing process by pyrolysing the active material on the current collector (e.g., directly on the current collector in various embodiments). Example coin cells were built using standard cathodes, standard electrolyte, and anodes formed using various embodiments described herein. Such coin cells were compared with coin cells built using standard cathodes, standard electrolyte, and anodes formed by laminating pyrolysed material (e.g., previously pyrolysed material) onto a copper or stainless steel current collector. Table I includes the test conditions for the different samples.

**TABLE I.**

| Cycling | |
|---|---|
| Cycle 1 | Charge at 0.5C to 4.3 V for 5 hours, rest 5 minutes, discharge at 0.2C to 2.75 V, rest 5 minutes |
| Cycle 2 | Charge at 0.5C to 4.3 V until 0.05C, rest 5 minutes, discharge at 0.5C to 3.3 V, rest 5 minutes |
| Cycles 3-50 | Same as Cycle 2 |
| Cycle 51 | Same as Cycle 1 |
| Cycles 52-100 | Same as Cycle 2 |
| Cycle 101 | Same as Cycle 1 |

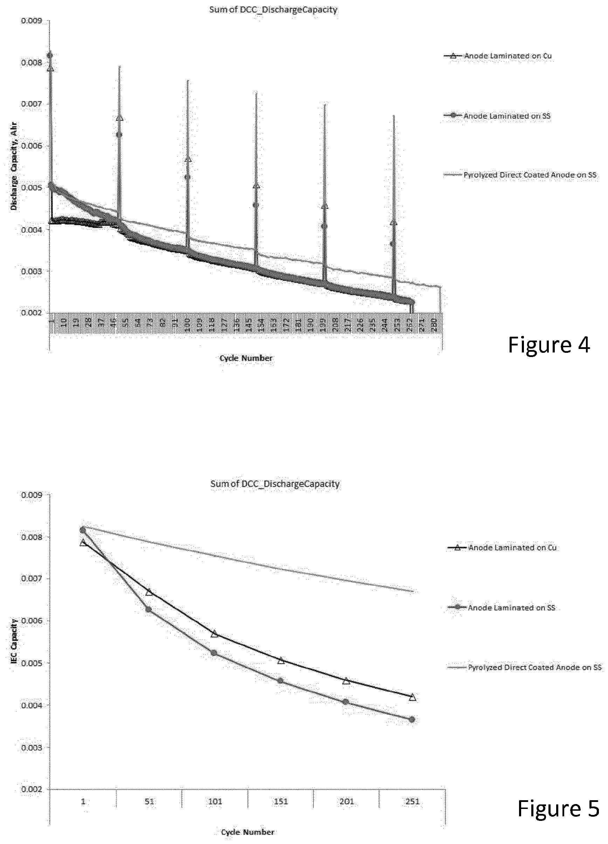

Figure 4 is a plot of discharge capacity as a function of the number of cycles for the different samples. Every fiftieth cycle was plotted to create Figure 5 which is a plot of the IEC (International Electrotechnical Commission) capacity as a function of the cycle number. As shown, the samples including the anode formed by coating and pyrolysing active material on a stainless steel current collector had the highest capacity compared to the samples where the anodes were first formed and subsequently laminated onto a copper or stainless steel current collector.

## Claims

1. An electrode such as an anode, the electrode comprising:
a current collector; and
a composite material on the current collector, the composite material comprising one or more types of carbon phases as a substantially continuous phase with micrometer-sized silicon particles distributed throughout the composite material,
wherein the current collector comprises stainless steel,
wherein the composite material is formed on the current collector and adhered to the current collector by pyrolysing, on the current collector, a mixture comprising a precursor and micrometer-sized silicon particles to convert the precursor into the one or more types of carbon phases.

2. The electrode of Claim 1, wherein the current collector comprises a stainless steel foil.

3. The electrode of Claim 1 or 2, wherein the current collector comprises a clad foil comprising stainless steel on at least one side of the clad foil, and the composite material is on the at least one side of the clad foil comprising the stainless steel.

4. An electrode such as an anode, the electrode comprising:
a current collector; and
a composite material on the current collector, the composite material comprising one or more types of carbon phases as a substantially continuous phase with micrometer-sized silicon particles distributed throughout the composite material,
wherein the current collector comprises tungsten,
wherein the composite material is formed on the current collector and adhered to the current collector by pyrolysing, on the current collector, a mixture comprising a precursor and micrometer-sized silicon particles to convert the precursor into the one or more types of carbon phases.

5. The electrode of Claim 4, wherein the current collector comprises a tungsten foil.

6. The electrode of Claim 4 or 5, wherein the current collector comprises a clad foil comprising tungsten on at least one side of the clad foil, and the composite material is on the at least one side of the clad foil comprising the tungsten.

7. The electrode of any of Claims 1 to 6, wherein the current collector comprises a current collector coated with a polymer on at least one side of the current collector, and the composite material is on the at least one side of the current collector comprising the polymer.

8. The electrode of any of Claims 1 to 6, wherein the current collector comprises a current collector coated with a carbon film on at least one side of the current collector, and the composite material is on the at least one side of the current collector comprising the carbon film.

9. The electrode of any of the preceding claims, wherein the composite material comprises the silicon particles at 70% to 95% by weight.

10. The electrode of any of the preceding claims, wherein the silicon particles have a particle size of between 10 nm and 50 µm, preferably between 0,1 and 30 µm, more preferred between 1 and 20 µm.

11. The electrode of any of the preceding claims, wherein the composite material further comprises conductive particles.

12. The electrode of any of the preceding claims, wherein the composite material comprises graphite.

## Patentansprüche

1. Elektrode, zum Beispiel Anode, wobei die Elektrode aufweist:
einen Stromkollektor; und
ein Verbundmaterial auf dem Stromkollektor, wobei das Verbundmaterial eine oder mehrere Arten von Karbonphasen als im Wesentliche kontinuierliche Phase mit Siliziumpartikeln in Mikrometergröße aufweist, die in dem gesamten Verbundmaterial verteilt sind,
wobei der Stromkollektor rostfreien Stahl aufweist,
wobei das Verbundmaterial auf dem Stromkollektor ausgebildet und an den Stromkollektor geklebt ist durch Pyrolisieren, auf dem Stromkollektor, einer Mischung, die einen Vorläufer und Siliziumpartikel in Mikrometergröße aufweist, um den Vorläufer in die eine oder die mehreren Arten von Karbonphasen umzuwandeln.

2. Elektrode nach Anspruch 1, wobei der Stromkollektor eine Folie aus rostfreiem Stahl aufweist.

3. Elektrode nach Anspruch 1 oder 2, wobei der Stromkollektor eine kaschierte Folie aufweist, die rostfreien Stahl auf wenigstens einer Seite der kaschierten Folie aufweist, und wobei das Verbundmaterial auf der wenigstens einen Seite der kaschierten Folie ist, die den rostfreien Stahl aufweist.

4. Elektrode, zum Beispiel Anode, wobei die Elektrode aufweist:
einen Stromkollektor; und
ein Verbundmaterial auf dem Stromkollektor, wobei das Verbundmaterial eine oder mehrere Arten von Karbonphasen als im Wesentliche kontinuierliche Phase mit Siliziumpartikeln in Mikrometergröße aufweist, die in dem gesamten Verbundmaterial verteilt sind,
wobei der Stromkollektor Wolfram aufweist,
wobei das Verbundmaterial auf dem Stromkollektor ausgebildet und an den Stromkollektor geklebt ist durch Pyrolisieren, auf dem Stromkollektor, einer Mischung, die einen Vorläufer und Siliziumpartikel in Mikrometergröße aufweist, um den Vorläufer in die eine oder die mehreren Arten von Karbonphasen umzuwandeln.

5. Elektrode nach Anspruch 4, wobei der Stromkollektor eine Wolframfolie aufweist.

6. Elektrode nach Anspruch 4 oder 5, wobei der Stromkollektor eine kaschierte Folie aufweist, die Wolfram auf wenigstens einer Seite der kaschierten Folie aufweist, und wobei das Verbundmaterial auf der wenigstens einen Seite der kaschierten Folie ist, die Wolfram aufweist.

7. Elektrode nach einem der Ansprüche 1 bis 6, wobei der Stromkollektor einen Stromkollektor aufweist, der mit einem Polymer auf wenigstens einer Seite des Stromkollektors beschichtet ist, und wobei das Verbundmaterial auf der wenigstens einen Seite des Stromkollektors, die das Polymer aufweist, ist.

8. Elektrode nach einem der Ansprüche 1 bis 6, wobei der Stromkollektor einen Stromkollektor aufweist, der mit einer Karbonfolie auf wenigstens einer Seite des Stromkollektors beschichtet ist, und wobei das Verbundmaterial auf der wenigstens einen Seite des Stromkollektors, die die Karbonfolie aufweist, ist.

9. Elektrode nach einem der vorhergehenden Ansprüche, wobei das Verbundmaterial die Siliziumpartikel mit 70 Gew.-% bis 95 Gew.-% aufweist.

10. Elektrode nach einem der vorhergehenden Ansprüche, wobei die Siliziumpartikel eine Partikelgröße zwischen 10 nm und 50 µm, bevorzugt zwischen 0,1 und 30 µm, noch bevorzugter zwischen 1 und 20 µm haben.

11. Elektrode nach einem der vorhergehenden Ansprüche, wobei das Verbundmaterial des Weiteren leitende Partikel aufweist.

12. Elektrode nach einem der vorhergehenden Ansprüche, wobei das Verbundmaterial Grafit aufweist.

## Revendications

1. Électrode telle qu'une anode, l'électrode comprenant :
un collecteur de courant ; et
un matériau composite sur le collecteur de courant, le matériau composite comprenant un ou plusieurs types de phases carbonées sous la forme d'une phase sensiblement continue avec des particules de silicium de taille micrométrique réparties dans tout le matériau composite,
dans laquelle le collecteur de courant comprend de l'acier inoxydable,
dans laquelle le matériau composite est formé sur le collecteur de courant et adhère au collecteur de courant par pyrolyse, sur le collecteur de courant, d'un mélange comprenant un précurseur et des particules de silicium de taille micrométrique pour convertir le précurseur en lesdits un ou plusieurs types de phases carbonées.

2. Électrode selon la revendication 1, dans laquelle le collecteur de courant comprend une feuille d'acier inoxydable.

3. Électrode selon la revendication 1 ou 2, dans laquelle le collecteur de courant comprend une feuille plaquée comprenant de l'acier inoxydable sur au moins un côté de la feuille plaquée, et le matériau composite se trouve sur ledit au moins un côté de la feuille plaquée comprenant l'acier inoxydable.

4. Électrode telle qu'une anode, l'électrode comprenant :
un collecteur de courant ; et
un matériau composite sur le collecteur de courant, le matériau composite comprenant un ou plusieurs types de phases carbonées sous la forme d'une phase sensiblement continue avec des particules de silicium de taille micrométrique réparties dans tout le matériau composite,
dans laquelle le collecteur de courant comprend du tungstène,
dans laquelle le matériau composite est formé sur le collecteur de courant et adhère au collecteur de courant par pyrolyse, sur le collecteur de courant, d'un mélange comprenant un précurseur et des particules de silicium de taille micrométrique pour convertir le précurseur en lesdits un ou plusieurs types de phases carbonées.

5. Électrode selon la revendication 4, dans laquelle le collecteur de courant comprend une feuille de tungstène.

6. Électrode selon la revendication 4 ou 5, dans laquelle le collecteur de courant comprend une feuille plaquée comprenant du tungstène sur au moins un côté de la feuille plaquée, et le matériau composite se trouve sur ledit au moins un côté de la feuille plaquée comprenant le tungstène.

7. Électrode selon l'une quelconque des revendications 1 à 6, dans laquelle le collecteur de courant comprend un collecteur de courant revêtu d'un polymère sur au moins un côté du collecteur de courant, et le matériau composite se trouve sur ledit au moins un côté du collecteur de courant comprenant le polymère.

8. Électrode selon l'une quelconque des revendications 1 à 6, dans laquelle le collecteur de courant comprend un collecteur de courant revêtu d'un film de carbone sur au moins un côté du collecteur de courant, et le matériau composite se trouve sur ledit au moins un côté du collecteur de courant comprenant le film de carbone.

9. Électrode selon l'une quelconque des revendications précédentes, dans laquelle le matériau composite comprend les particules de silicium à raison de 70 % à 95 % en poids.

10. Électrode selon l'une quelconque des revendications précédentes, dans laquelle les particules de silicium ont une taille de particules comprise entre 10 nm et 50 µm, de préférence entre 0,1 et 30 µm, plus préférentiellement entre 1 et 20 µm.

11. Électrode selon l'une quelconque des revendications précédentes, dans laquelle le matériau.composite comprend en outre des particules conductrices.

12. Électrode selon l'une quelconque des revendications précédentes, dans laquelle le matériau composite comprend du graphite.
